# EUROPÄISCHE PATENTSCHRIFT

(11) **EP 4 209 725 B1**
(45) Veröffentlichungstag und Bekanntmachung des Hinweises auf die Patenterteilung: **10.09.2025**
(21) Anmeldenummer: 22151051.4
(22) Anmeldetag: 11.01.2022
(51) Int. Cl.: F24F 13/10, F24F 13/14, F24F 13/20, F24F 11/89, F16K 31/04, G05D 7/06, F16K 37/00

(54) **VOLUMENSTROMREGLER FÜR EINE KLIMA- UND LÜFTUNGSTECHNISCHE ANLAGE**
VOLUMETRIC FLOW REGULATOR FOR AN AIR CONDITIONING AND VENTILATION SYSTEM
RÉGULATEUR DE DÉBIT VOLUMIQUE POUR UNE INSTALLATION DE CLIMATISATION ET D'AÉRATION

(43) Veröffentlichungstag der Anmeldung: 12.07.2023
(73) Patentinhaber: TROX SE, 47506 Neukirchen-Vluyn (DE)
(72) Erfinder: Lange, Stefan, 47506 Neukirchen-Vluyn (DE); Wolters, Thomas, 41812 Erkelenz (DE)
(74) Vertreter: Dr. Stark & Partner Patentanwälte mbB

(56) Entgegenhaltungen:
- EP-A1- 3 285 018
- EP-B1- 1 950 508
- WO-A1-2010/122117
- WO-A1-2014/202084
- WO-A1-2015/154777
- DE-A1- 102013 218 522
- DE-U1- 202004 010 819
- DE-U1- 202007 001 507
- JP-A- 2020 109 357
- US-A1- 2020 400 341
- US-B2- 10 007 239
- US-B2- 10 394 257
- US-B2- 10 670 295
- US-B2- 11 002 461
- US-B2- 8 336 544
- EWS EQUIPMENT FOR WATERTREATMENT SYSTEMS INTERNATIONAL BV: "Steuerungen für Ionenaustauscher und Filteranlagen (Zentralsteuerventile und Pilotverteiler)", 1 January 2013 (2013-01-01), pages 1 - 39, XP093208016, Retrieved from the Internet <URL:https://www.ewsint.com/products/controllers/filtersoftener/es2030cv/)>

## Beschreibung

Die Erfindung betrifft einen Volumenstromregler für eine klima- und lüftungstechnische Anlage mit einem Gehäuse, welches eine Gehäusewandung aufweist und einen Strömungskanal für ein gasförmiges Medium bildet, und mit einer im Inneren des Strömungskanals auf einer quer zur Strömungsrichtung angeordneten und zumindest eine Gehäusewandung des Strömungskanals durchfassenden Welle schwenkbar gelagerten Regelklappe, wobei zur Veränderung der Stellung der Regelklappe an dem aus dem Strömungskanal herausragenden Bereich der Welle ein Stelltrieb angreift, welcher mit einer Regeleinrichtung verbunden ist.

Derartige Volumenstromregler sind in der Praxis über die Regeleinrichtung beispielsweise mit einer Gebäudeleittechnik verbunden. Für die Bestimmung der Strömungsgeschwindigkeit des in dem Strömungskanals strömenden Mediums und des strömenden Volumenstroms umfassen derartige Volumenstromregler einen Druckdifferenzsensor. Mittels des Druckdifferenzsensors wird ein Differenzdruck gemessen und bestimmt. Aufgrund des gemessenen Differenzdruckes wird dann die Strömungsgeschwindigkeit oder der Volumenstrom bestimmt. Ein Druckdifferenzsensor weist neben einem Transmitter zumindest zwei in Strömungsrichtung gesehen in einem Abstand hintereinander angeordnete Entnahmeöffnungen auf, über die eine Druckdifferenz bestimmt und hieraus der Istwert ermittelt wird. Dieser Istwert wird mit einem hinterlegten Sollwert verglichen. Im Falle von Abweichungen erhält der Stelltrieb ein entsprechendes Signal. Zur Druckdifferenz-Entnahme werden beispielsweise aus zwei sich kreuzenden Röhrchen bestehende Messkreuze verwendet, wobei jedes Röhrchen in der Regel mehrere Entnahmeöffnungen aufweist. Die DE 20 2004 010 819 U1 beschreibt einen Volumenstromregler, insbesondere für klima- und lüftungstechnische Anlagen. Aus der US 2020/0400341 A1 ist eine Niederdruckkontrollvorrichtung für ein HVAC Flüssigkeitstransport-System bekannt.

Nachteilig hierbei ist, dass der Einbau und der Betrieb von Einrichtungen zur Entnahme von Druckdifferenzen aufwändig ist, da neben der Regelklappe weitere Bauteile im Inneren des Strömungskanals installiert werden müssen. Da eine Einrichtung zur Entnahme von Druckdifferenzen in den Strömungskanal hineinragt, beeinflusst sie das Strömungsverhalten des gasförmigen Mediums und ist auch anfällig für Verschmutzung und Verschleiß. Zudem müssen sie zur Erzielung einer hinreichenden Messgenauigkeit in Strömungsrichtung gesehen in einem ausreichenden Abstand zu der Regelklappe angeordnet sein.

Aufgabe der Erfindung ist es daher, einen bekannten Volumenstromregler anzugeben, der die vorgenannten Nachteile vermeidet und der sich durch eine kompakte Bauform auszeichnet.

Diese Aufgabe wird dadurch gelöst, dass der Volumenstromregler zumindest eine mit der Regeleinrichtung verbundene Ultraschallmesseinrichtung umfassend zumindest einen Sender und zumindest einen Empfänger umfasst, dass der Volumenstromregler zwei Einstelleinrichtungen zum Einstellen des zulässigen Bereichs des Volumenstroms mit einem minimalen Grenzwert und mit einem maximalen Grenzwert aufweist, wobei die Einstelleinrichtung die Höhe zumindest eines Grenzwertes beeinflusst und wobei die andere Einstelleinrichtung

| | |
|---|---|
| entweder | die Höhe des zweiten Grenzwertes beeinflusst |
| oder aber | zur Umschaltung der Wirkung der einen (ersten) Einstelleinrichtung zwischen den Grenzwerten dient. |

Der erfindungsgemäße Volumenstromregler zeichnet sich dadurch aus, dass die Ultraschallmesseinrichtung keine in den Strömungskanal hineinragenden Bauteile aufweist. Dies erlaubt einen verschleißärmeren und wartungsfreieren Betrieb. Auch werden Reinigungsarbeiten erheblich vereinfacht. Während bei bekannten Einrichtungen zur Entnahme von Druckdifferenzen die für die Druckbestimmung erforderlichen Entnahmeöffnungen, insbesondere bei staubbeladenen gasförmigen Medien, verstopfen und insoweit regelmäßig gereinigt werden müssen, sind derartige Reinigungsmaßnahmen bei Anwendung der Ultraschallmesstechnik nicht erforderlich.

Jede Ultraschallmesseinrichtung umfasst zumindest einen Sender und zumindest einen Empfänger. Bei dem Sender und dem Empfänger kann es sich um zwei separate Bauteile handeln. Es ist aber auch möglich, dass der Sender gleichzeitig auch als Empfänger dient. Über die Ultraschallmesseinrichtung kann die Strömungsgeschwindigkeit des in Strömungsrichtung strömenden gasförmigen Mediums ermittelt werden, die an die Regeleinrichtung weitergeleitet wird. Auf diese Weise kann der in dem Gehäuse strömende Volumenstrom bestimmt werden.

Der Volumenstromregler verfügt über zwei Einstelleinrichtungen, mittels derer der zulässige Bereich des Volumenstroms mit einem minimalen Grenzwert und mit einem maximalen Grenzwert eingestellt werden können. Auf diese Weise ist eine einfache Verstellung der Sollvolumenstrombereiche (q_{v, min} und q_{v, max}) durch den Benutzer an dem Volumenstromregler möglich. Für die Vornahme einer Einstellung kann jeder Einstelleinrichtung beispielsweise eine analoge Darstellung in Form einer Skala zugeordnet sein.

Nach dem Einbau des Volumenstromreglers kann ein Benutzer insoweit einfach an dem Volumenstromregler selbst den minimalen Grenzwert sowie den maximalen Grenzwert des zulässigen Bereichs des Volumenstroms einstellen. Für das Einstellen kann an dem Volumenstromregler beispielsweise ein Diagramm mit Kennlinien aufgeklebt sein, aus denen der Benutzer die einzustellenden Sollvolumenstrombereiche (q_{v, min} und q_{v, max}) abliest und diese dann entsprechend mittels der Einstelleinrichtungen einstellt. Weichen im späteren Betrieb des Volumenstromreglers die gemessenen Istwerte von den in der Regeleinrichtung hinterlegten Sollwerten ab, wird von der Regeleinrichtung an den Stelltrieb ein entsprechendes Signal weitergegeben und so die Regelklappeneinstellung innerhalb des vorgegebenen Sollvolumenstrombereichs (q_{v, min} und q_{v, max}) verändert.

Bei einer Ausführungsform kann die eine Einstelleinrichtung (erste Einstelleinrichtung) zum Einstellen des minimalen Grenzwertes des zulässigen Bereichs des Volumenstroms und die andere Einstelleinrichtung (zweite Einstelleinrichtung) kann zum Einstellen des maximalen Grenzwertes des zulässigen Volumenstroms im Strömungskanal dienen. Bei einer solchen Ausgestaltung wird der minimale Grenzwert über die erste Einstelleinrichtung und der maximale Grenzwert über die zweite Einstelleinrichtung eingestellt. Selbstverständlich ist auch eine umgekehrte Einstellung möglich, d. h. der minimale Grenzwert wird über die zweite Einstelleinrichtung und der maximale Grenzwert über die erste Einstelleinrichtung eingestellt.

Dabei können die beiden Einstelleinrichtungen identisch ausgebildet sein. Selbstverständlich ist es aber auch möglich, dass die Einstelleinrichtungen eine abweichende konstruktive Ausgestaltung und/oder ein anderes Wirkprinzip aufweisen.

Es ist aber auch durchaus möglich, dass die eine Einstelleinrichtung (erste Einstelleinrichtung) zum Einstellen des minimalen Grenzwertes und des maximalen Grenzwertes des zulässigen Bereichs des Volumenstroms dient und die andere Einstelleinrichtung zum Umschalten der Wirkung der einen Einstelleinrichtung (ersten Einstelleinrichtung) auf den jeweils anderen Grenzwert des zulässigen Bereichs des Volumenstroms dient. Bei einer solchen Ausgestaltung kann die erste Einstelleinrichtung beispielsweise als Potentiometer ausgebildet sein. Die andere Einstelleinrichtung dient beispielsweise zur Verlagerung der ersten Einstelleinrichtung durch Herausziehen aus einer ersten Ebene in eine zweite Ebene und umgekehrt. In der ersten Ebene kann mittels der ersten Einstelleinrichtung beispielsweise der minimale Grenzwert eingestellt werden, während nach Verlagerung der ersten Einstelleinrichtung in die zweite Ebene mittels der ersten Einstelleinrichtung nunmehr der maximale Grenzwert eingestellt wird. Bei einer anderen Ausführungsform kann die eine Einstelleinrichtung (erste Einstelleinrichtung) als Inkrementalgeber ausgebildet sein und durch Drehen zum Einstellen des minimalen Grenzwertes und des maximalen Grenzwertes des zulässigen Bereichs des Volumenstroms dienen. Die andere Einstelleinrichtung (zweite Einstelleinrichtung) kann bei einer solchen Ausgestaltung beispielsweise ebenfalls als Inkrementalgeber ausgebildet sein und durch Drücken zum Umschalten der Wirkung der einen Einstelleinrichtung (ersten Einstelleinrichtung) auf den jeweils anderen Grenzwert des zulässigen Bereichs des Volumenstroms dienen. Selbstverständlich sind auch andere Ausführungsformen denkbar.

Zumindest eine Einstelleinrichtung kann als Dreh- oder Lineargeber ausgebildet sein.

Zumindest eine Einstelleinrichtung kann als Potentiometer ausgebildet sein.

Selbstverständlich sind auch andere Ausgestaltungen von Einstelleinrichtungen möglich, mittels derer der minimale und/oder der maximale Grenzwert eingestellt werden können.

Dabei kann der Volumenstromregler zumindest eine Anzeige zur Darstellung wenigstens eines Grenzwerts aufweisen. Die Anzeige kann beispielsweise als digitales Display ausgebildet sein. Das Display kann dabei in der Regeleinrichtung integriert oder aber ansteckbar sein. Auf dem Display kann beispielsweise der eingestellte Grenzwert zahlenmäßig angezeigt werden.

Im Falle einer kompakten Bauweise bietet sich an, dass die Regeleinrichtung und der Stelltrieb in einem gemeinsamen Gehäuse angeordnet sind.

Um eine höhere Flexibilität zu gewährleisten, ist es auch möglich, dass die Regeleinrichtung, zumindest eine Ultraschallmesseinrichtung und/oder der Stelltrieb jeweils in einem eigenen Gehäuse angeordnet sind. Die einzelnen Gehäuse können im Abstand zueinander auf der Außenseite des den Strömungskanal bildenden Gehäuses angeordnet sein. Es ist aber durchaus möglich, dass beispielsweise das Gehäuse mit der Regeleinrichtung und dem Stelltrieb zu einer Art Einheit miteinander verbunden sind, was die Montage und auch die Demontage erleichtert.

Die Regeleinrichtung kann zumindest einen Anschluss, vorzugsweise einen als Steckplatz ausgebildeten Anschluss, für die temporäre Aufnahme und/oder für die permanente Aufnahme einer Zusatzkarte zur Anbindung an ein übergeordnetes System über zum Beispiel digitale Bussignale, vorzugsweise an eine Gebäudeleittechnik oder eine Cloud, aufweisen.

Die Regeleinrichtung kann zumindest einen Anschluss, vorzugsweise einen als Steckplatz ausgebildeten Anschluss, für die temporäre Aufnahme oder für die permanente Aufnahme einer Zusatzkarte zur Anbindung zumindest eines weiteren Sensors aufweisen.

Dabei kann zumindest eine Zusatzkarte fest in der Regeleinrichtung integriert sein.

Der Regeleinrichtung kann zumindest ein einen Messbereich aufweisenden Sensor, vorzugsweise ein Temperatur- oder Feuchtesensor zugeordnet sein, der zumindest mit seinem Messbereich mit dem im Strömungskanal strömenden gasförmigen Medium in Kontakt ist. Bei einem Sensor kann es sich beispielsweise um einen Temperatursensor, um einen Feuchtesensor, um einen Sensor zur Erkennung der Luftqualität, wie beispielsweise einen Sensor zur Bestimmung gas- und dampfförmiger Stoffe organischen Ursprungs in der Luft (VOC-Sensor) oder CO₂-Sensor, einen Feinstaubsensor oder dergleichen handeln.

Auch kann der Regeleinrichtung ein Sensor zur Erkennung der Belegung in dem Raum zugeordnet sein.

Dabei kann zumindest ein Sensor in den Volumenstromregler, vorzugsweise in die Regeleinrichtung des Volumenstromreglers, integriert sein.

Der Sender und der Empfänger zumindest einer Ultraschallmesseinrichtung können auf gegenüberliegenden Seiten des Gehäuses angeordnet sein.

Für eine kompakte Ausführung kann zumindest eine Ultraschallmesseinrichtung im Gehäuse der Regeleinrichtung angeordnet sein.

Der Sender und/oder der Empfänger zumindest einer Ultraschallmesseinrichtung kann (können) zur Messung der Strömungsgeschwindigkeit zumindest teilweise mit dem im Strömungskanal strömenden gasförmigen Medium in Kontakt sein.

Alternativ ist es auch möglich, dass der Sender und/oder der Empfänger zumindest einer Ultraschallmesseinrichtung auf der Außenseite der Gehäusewandung angeordnet ist (sind). Bei einer solchen Ausgestaltung kommt weder der Sender noch der Empfänger mit seinem jeweiligen Sende- bzw. Empfangsbereich mit dem strömenden gasförmigen Medium in Kontakt. Verschmutzungen, die durch das strömende gasförmige Medium verursacht werden könnten, sind insoweit bei einer solchen Ausgestaltung ausgeschlossen.

Der Sender und der Empfänger zumindest einer Ultraschallmesseinrichtung können zur Reduzierung der Anzahl an Bauteilen in einem Bauteil angeordnet sein. Bei einer solchen Ausgestaltung sind der Sender und Empfänger der betreffenden Ultraschallmesseinrichtung auf einer Seite des Gehäuses angeordnet.

Im Folgenden werden in den Zeichnungen dargestellte Ausführungsbeispiele der Erfindung erläutert. Es zeigen:
- Fig. 1: ein erstes Ausführungsbeispiel eines erfindungsgemäßen Volumenstromreglers,
- Fig. 2: ein zweites Ausführungsbeispiel eines erfindungsgemäßen Volumenstromreglers,
- Fig. 3: ein drittes Ausführungsbeispiel eines erfindungsgemäßen Volumenstromreglers,
- Fig. 4: eine Draufsicht auf das Gehäuse einer Regeleinrichtung mit einem Stelltrieb und
- Fig. 5: eine Seitenansicht auf den Gegenstand nach Fig. 4.

In allen Figuren werden für gleiche bzw. gleichartige Bauteile übereinstimmende Bezugszeichen verwendet.

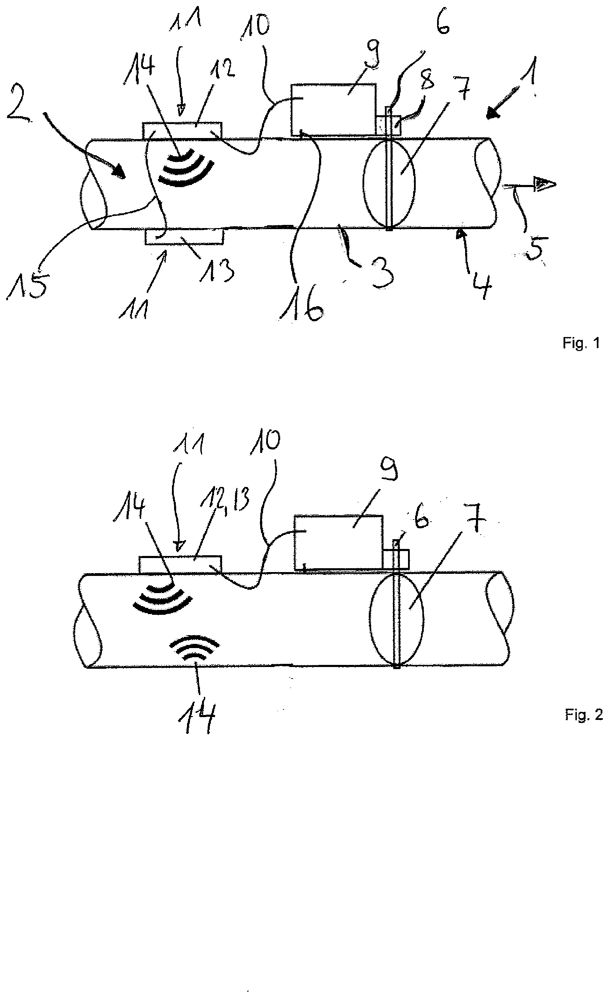

Der in den Fig. 1 bis 3 dargestellte Volumenstromregler 1 umfasst zum einen ein eine Gehäusewandung 3 aufweisendes, einen Strömungskanal 2 für ein gasförmiges Medium bildendes Gehäuse 4. Zum anderen ist im Inneren des Strömungskanals 2, auf einer quer zur Strömungsrichtung 5 angeordneten und die Gehäusewandung 3 des Strömungskanals 2 durchfassenden Welle 6 eine schwenkbar gelagerte Regelklappe 7 vorgesehen.

Zur Veränderung der Stellung der Regelklappe 7 greift an dem aus dem Strömungskanal 2 herausragenden Ende der Welle 6 ein Stelltrieb 8 an. Der Stelltrieb 8 kann unmittelbar oder mittelbar mit dem Ende der Welle 6 verbunden sein. Bei einer mittelbaren Verbindung ist zwischen der Welle 6 und dem Stelltrieb 8 noch ein nicht dargestelltes Getriebe vorgesehen. Der Stelltrieb 8 und ein eventuelles Getriebe sind außenseitig an dem Gehäuse 4 angebracht und mit einer Regeleinrichtung 9 verbunden. Die Regeleinrichtung 9 weist beispielsweise eine nicht dargestellte elektronische Platine auf.

Die Regeleinrichtung 9 ist damit ebenfalls außenseitig an dem Gehäuse 4 angebracht. Über eine Leitung 10 ist die Regeleinrichtung 9 mit einer Ultraschallmesseinrichtung 11 verbunden. Die Ultraschallmesseinrichtung 11 umfasst zumindest einen Sender 12 und zumindest einen Empfänger 13 und sendet über den Sender 12 ein Ultraschallsignal 14 entlang des Querschnitts des Strömungskanals 2. Mittels der Ultraschallmesseinrichtung 11 kann die Strömungsgeschwindigkeit gemessen werden.

Bei dem Ausführungsbeispiel nach Fig. 1 sind der Sender 12 und der Empfänger 13 der Ultraschallmesseinrichtung 11 auf gegenüberliegenden Seiten des Strömungskanals 2 angeordnet, wobei der Sender 12 und der Empfänger 13 der Ultraschallmesseinrichtung 11 über eine Leitung 15 miteinander verbunden sind.

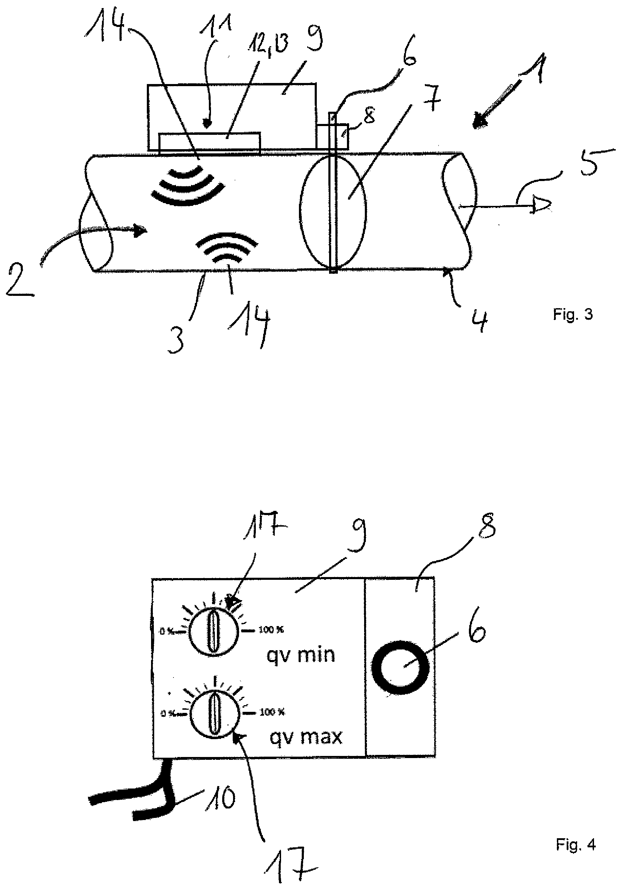

In den Ausführungsbeispielen nach den Fig. 2 und 3 sind der Sender 12 und der Empfänger 13 der Ultraschallmesseinrichtung 11 in einem Bauteil auf lediglich einer Seite des Strömungskanals 2 angebracht. Die Ultraschallsignale 14 werden entlang des Querschnitts des Strömungskanals 2 ausgesendet und von der Innenseite der Gehäusewandung 3 reflektiert.

Selbstverständlich ist es auch möglich, dass der Sender 12 gleichzeitig auch als Empfänger 13 dient. Bei einer solchen Ausführungsform erfolgt das Senden und das anschließende Empfangen zeitversetzt.

Während bei den Ausführungsbeispielen nach den Fig. 1 und 2 die Ultraschallmesseinrichtung 11 und die Regeleinrichtung 9 einzelnen und damit in getrennten Gehäusen angeordnet sind, ist im Ausführungsbeispiel nach Fig. 3 eine kompakte Ausführungsform dahingehend dargestellt, dass die Ultraschallmesseinrichtung 11, die sowohl den Sender 12 als auch den Empfänger 13 enthält, und die Regeleinrichtung 9 in einem Gehäuse angeordnet sind.

Wie den Fig. 1 bis 3 zu entnehmen ist, ist die Regeleinrichtung 9 mit einer ihrer vier Seiten an dem Stelltrieb 8 angeflanscht. Insoweit bilden die Regeleinrichtung 9 und der Stelltrieb 8 eine Einheit, die leicht montiert und auch leicht wieder entfernt werden kann. So muss der Stelltrieb 8 bei der Montage lediglich auf das aus dem Gehäuse 2 hinausragende Ende der Welle 6 aufgesteckt werden. Um ein Verdrehen bei Betrieb des Stelltriebs 8 zu verhindern, ist eine Verdrehsicherung 16 vorgesehen.

Wie Fig. 4 zu entnehmen ist, weist die Regeleinrichtung 9 in dem dargestellten Ausführungsbeispiel zwei Einstelleinrichtungen 17 zur Einstellung des zulässigen Bereichs des Volumenstroms im Strömungskanal 2 auf. In den Fig. 1 bis 3 sind die Einstelleinrichtungen 17 nicht sichtbar. Mittels der Einstelleinrichtungen 17 ist eine einfache Verstellung der Sollvolumenstrombereiche (q_{v, min} und q_{v, max}) durch den Benutzer an dem Volumenstromregler 1 möglich.

In dem dargestellten Ausführungsbeispiel ist jede Einstelleinrichtung 17 als Potentiometer ausgebildet. Insoweit sind die beiden Einstelleinrichtungen 17 identisch ausgebildet. Jedes Potentiometer ist leicht von außen zugänglich in dem Gehäuse der Regeleinrichtung 9 angeordnet. Jedes Potentiometer weist eine linienförmige Einkerbung auf. Die linienförmige Einkerbung erlaubt eine einfache Verstellung des jeweiligen Potentiometers beispielsweise durch einen Schraubendreher.

Ferner ist auf dem Gehäuse um jedes Potentiometer herum eine Skalierung vorgesehen. Bei dem in Fig. 4 dargestellten Ausführungsbeispiel dient das obere Potentiometer zur Einstellung des minimalen Grenzwertes des zulässigen Bereichs des in dem Strömungskanal 2 strömenden Volumenstroms. Der minimale Grenzwert kann in dem dargestellten Ausführungsbeispiel beliebig zwischen 0 % und 100 % eingestellt werden.

Wie Fig. 4 zu entnehmen ist, befindet sich in dem dargestellten Ausführungsbeispiel der Stelltrieb 8 einschließlich eines eventuellen Getriebes unterhalb der Regeleinrichtung 9, d. h. im auf das Gehäuse 4 montierten Zustand befindet sich der Stelltrieb 8 einschließlich eines eventuellen Getriebes zwischen der Regeleinrichtung 9 und dem Gehäuse 4. Der Stelltrieb 8 einschließlich eines eventuellen Getriebes erstreckt sich dabei über die gesamte Fläche der Regeleinrichtung 9 und steht auf der in Fig. 4 rechten Seite unter Bildung eines vorstehenden Bereichs seitlich über die Regeleinrichtung 9 hinaus. In dem vorstehenden Bereich ist die Aufnahme für die Welle 6 angeordnet.

Das in Fig. 4 dargestellte untere Potentiometer dient zur Einstellung des maximalen Grenzwertes des zulässigen Bereichs des Volumenstroms, der in dem dargestellten Ausführungsbeispiel ebenfalls beliebig zwischen 0 % und 100 % eingestellt werden kann. Damit können beide Grenzwerte einfach von außen durch Verdrehen eingestellt werden.

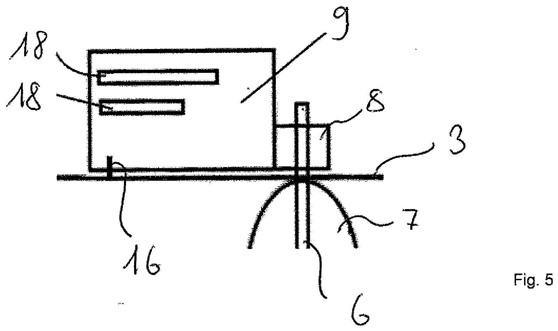

Wie Fig. 5 zu entnehmen ist, sind in dem dargestellten Ausführungsbeispiel in dem Gehäuse der Regeleinrichtung 9 zwei als Steckplätze ausgebildete Anschlüsse 18 vorgesehen. In einen als Steckplatz ausgebildeten Anschluss 18 kann beispielsweise eine Zusatzkarte eingesteckt werden. Auch kann in einen Anschluss 18 beispielsweise ein Kontaktelement eines nicht dargestellten Sensors, wie beispielsweise eines Temperatursensors oder eines Feuchtesensors, eingesteckt werden. Auch ermöglicht ein Anschluss 18 eine Verbindung des Volumenstromreglers 1 mit einem übergeordneten System, beispielsweise der Gebäudeleittechnik (GLT).

## Patentansprüche

1. Volumenstromregler (1) für eine klima- und lüftungstechnische Anlage mit einem eine Gehäusewandung (3) aufweisenden, einen Strömungskanal (2) für ein gasförmiges Medium bildenden Gehäuse (4) und mit einer im Inneren des Strömungskanals (2), auf einer quer zur Strömungsrichtung (5) angeordneten und zumindest eine Gehäusewandung (3) des Strömungskanals (2) durchfassenden Welle (6) schwenkbar gelagerten Regelklappe (7), wobei zur Veränderung der Stellung der Regelklappe (7) an dem aus dem Strömungskanal (2) herausragenden Bereich der Welle (6) ein Stelltrieb (8) angreift und wobei der Stelltrieb (8) mit einer Regeleinrichtung (9) verbunden ist, **dadurch gekennzeichnet, dass** der Volumenstromregler (1) zumindest eine mit der Regeleinrichtung (9) verbundene Ultraschallmesseinrichtung (11) umfassend zumindest einen Sender (12) und zumindest einen Empfänger (13) umfasst, dass der Volumenstromregler (1) zwei Einstelleinrichtungen (17) zum Einstellen des zulässigen Bereichs des Volumenstroms mit einem minimalen Grenzwert und mit einem maximalen Grenzwert aufweist, wobei die Einstelleinrichtung (17) die Höhe zumindest eines Grenzwertes beeinflusst und wobei die andere Einstelleinrichtung (17)
| | |
|---|---|
| entweder | die Höhe des zweiten Grenzwertes beeinflusst |
| oder aber | zur Umschaltung der Wirkung der einen Einstelleinrichtung (17) zwischen den Grenzwerten dient, wobei die Ultraschallmesseinrichtung keine in den Strömungskanal hineinragende Bauteile aufweist. |

2. Volumenstromregler (1) nach dem vorhergehenden Anspruch, **dadurch gekennzeichnet, dass** die eine Einstelleinrichtung (17) zum Einstellen des minimalen Grenzwertes des zulässigen Bereichs des Volumenstroms und die andere Einstelleinrichtung (17) zum Einstellen des maximalen Grenzwertes des zulässigen Volumenstroms im Strömungskanal (2) dient.

3. Volumenstromregler (1) nach dem vorhergehenden Anspruch, **dadurch gekennzeichnet, dass** die beiden Einstelleinrichtungen (17) identisch ausgebildet sind.

4. Volumenstromregler (1) nach Anspruch 1, **dadurch gekennzeichnet, dass** die eine Einstelleinrichtung (17) zum Einstellen des minimalen Grenzwertes und des maximalen Grenzwertes des zulässigen Bereichs des Volumenstroms und die andere Einstelleinrichtung (17) zum Umschalten der Wirkung der einen Einstelleinrichtung (17) auf den jeweils anderen Grenzwert des zulässigen Bereichs des Volumenstroms dient.

5. Volumenstromregler (1) nach einem der vorhergehenden Ansprüche, **dadurch gekennzeichnet, dass** zumindest eine Einstelleinrichtung (17) als Dreh- oder Lineargeber ausgebildet ist.

6. Volumenstromregler (1) nach einem der vorhergehenden Ansprüche, **dadurch gekennzeichnet, dass** zumindest eine Einstelleinrichtung (17) als Potentiometer ausgebildet ist.

7. Volumenstromregler (1) nach Anspruch 1, **dadurch gekennzeichnet, dass** der Volumenstromregler (1) zumindest eine Anzeige zur Darstellung wenigstens eines Grenzwerts aufweist.

8. Volumenstromregler (1) nach einem der vorhergehenden Ansprüche, **dadurch gekennzeichnet, dass** die Regeleinrichtung (9) und der Stelltrieb (8) in einem gemeinsamen Gehäuse angeordnet sind.

9. Volumenstromregler (1) nach einem der Ansprüche 1 bis 7, **dadurch gekennzeichnet, dass** die Regeleinrichtung (9), zumindest eine Ultraschallmesseinrichtung (11) und/oder der Stelltrieb (8) jeweils in einem eigenen Gehäuse angeordnet sind.

10. Volumenstromregler (1) nach einem der vorhergehenden Ansprüche, **dadurch gekennzeichnet, dass** die Regeleinrichtung (9) zumindest einen Anschluss (18), vorzugsweise einen als Steckplatz ausgebildeten Anschluss (18), für die Aufnahme einer Zusatzkarte zur Anbindung an ein übergeordnetes System, vorzugsweise an eine Gebäudeleittechnik, aufweist.

11. Volumenstromregler (1) nach einem der vorhergehenden Ansprüche, **dadurch gekennzeichnet, dass** die Regeleinrichtung (9) zumindest einen Anschluss (18), vorzugsweise einen als Steckplatz ausgebildeten Anschluss (18), für die Aufnahme einer Zusatzkarte zur Anbindung zumindest eines weiteren Sensors aufweist.

12. Volumenstromregler (1) nach einem der Ansprüche 10 oder 11, **dadurch gekennzeichnet, dass** zumindest eine Zusatzkarte fest in der Regeleinrichtung (9) integriert ist.

13. Volumenstromregler (1) nach einem der vorhergehenden Ansprüche, **dadurch gekennzeichnet, dass** der Regeleinrichtung (9) zumindest ein einen Messbereich aufweisenden Sensor, vorzugsweise ein Temperatur- oder Feuchtesensor, zugeordnet ist, der zumindest mit seinem Messbereich mit dem im Strömungskanal (2) strömenden gasförmigen Medium in Kontakt ist.

14. Volumenstromregler (1) nach einem der vorhergehenden Ansprüche, **dadurch gekennzeichnet, dass** der Sender (12) und der Empfänger (13) zumindest einer Ultraschallmesseinrichtung (11) auf gegenüberliegenden Seiten des Gehäuses (4) angeordnet sind.

15. Volumenstromregler (1) nach einem der vorhergehenden Ansprüche, **dadurch gekennzeichnet, dass** zumindest eine Ultraschallmesseinrichtung (11) im Gehäuse der Regeleinrichtung (9) angeordnet ist.

16. Volumenstromregler (1) nach einem der vorhergehenden Ansprüche, **dadurch gekennzeichnet, dass** der Sender (12) und/oder der Empfänger (13) zumindest einer Ultraschallmesseinrichtung (11) zumindest teilweise mit dem im Strömungskanal (2) strömenden gasförmigen Medium in Kontakt ist (sind).

17. Volumenstromregler (1) nach einem der Ansprüche 1 bis 15, **dadurch gekennzeichnet, dass** der Sender (12) und/oder der Empfänger (13) zumindest einer Ultraschallmesseinrichtung (11) auf der Außenseite der Gehäusewandung (3) angeordnet ist (sind).

18. Volumenstromregler (1) nach einem der vorhergehenden Ansprüche, **dadurch gekennzeichnet, dass** der Sender (12) und der Empfänger (13) zumindest einer Ultraschallmesseinrichtung (11) in einem Bauteil angeordnet sind.

## Claims

1. Volumetric flow regulator (1) for an air conditioning and ventilation system with a housing (4) comprising a housing wall (3), forming a flow channel (2) for a gaseous medium, and with a regulator flap (7) in the interior of the flow channel (2), mounted such as to pivot on a shaft (6) arranged transverse to the direction of flow (5) and passing through at least one housing wall (3) of the flow channel (2), wherein, in order to change the setting of the regulator flap (7) in the region of the shaft (6) projecting out of the flow channel (2), a actuator (8) engages, and wherein the actuator (8) is connected to a regulator device (9), **characterised in that** the volume flow regulator (1) comprises at least one ultrasonic measuring device (11) connected to the regulator device (9), comprising at least one transmitter (12) and at least one receiver (13), that the volumetric flow regulator (1) comprises two adjustment devices (17) for adjusting the permissible range of the volume flow, with a minimum limit value and a maximum limit value, wherein the adjustment device (17) influences the amount of at least one limit value, and wherein the other adjustment device (17)
| | |
|---|---|
| either | influences the amount of the second limit value |
| or | serves to switch over the effect of the first adjustment device (17) between the limit values, wherein the ultrasonic measuring device does not comprise any components projecting into the flow channel. |

2. Volumetric flow regulator (1) according to the preceding claim, **characterised in that** the one adjustment device (17) serves to adjust the minimum limit value of the permissible range of the volume flow, and the other adjustment device (17) serves to adjust the maximum limit value of the permissible volume flow in the flow channel (2).

3. Volumetric flow regulator (1) according to the preceding claim, **characterised in that** the two adjustment devices (17) are identical in configuration.

4. Volumetric flow regulator (1) according to claim 1, **characterised in that** the adjustment device (17) serves to adjust the minimum limit value and the maximum limit value of the permissible range of the volume flow, and the other adjustment device (17) serves to switch over the effect of the first adjustment device (17) to the respective other limit value of the permissible range of the volume flow.

5. Volumetric flow regulator (1) according to any one of the preceding claims, **characterised in that** at least one adjustment device (17) is configured as a rotary transducer or linear transducer.

6. Volumetric flow regulator (1) according to any one of the preceding claims, **characterised in that** at least one adjustment device (17) is configured as a potentiometer.

7. Volumetric flow regulator (1) according to claim 1, **characterised in that** the volumetric flow regulator (1) comprises at least one display for representing at least one limit value.

8. Volumetric flow regulator (1) according to any one of the preceding claims, **characterised in that** the regulator device (9) and the actuator (8) are arranged in a common housing.

9. Volumetric flow regulator (1) according to any one of claims 1 to 7, **characterised in that** the regulator device (9), at least one ultrasonic measuring device (11), and the actuator (8) are each arranged in a common housing.

10. Volumetric flow regulator (1) according to any one of the preceding claims, **characterised in that** the regulator device (9) comprises at least one connection (18), preferably a connection (18) configured as a plug connection, for receiving an additional card for connecting to a superordinated system, preferably to a building instrumentation and control system.

11. Volumetric flow regulator (1) according to any one of the preceding claims, **characterised in that** the regulator device (9) comprises at least one connection (18), preferably a connection (18) configured as a plug connection, for receiving an additional card for connecting at least one further sensor.

12. Volumetric flow regulator (1) according to any one of claims 10 or 11, **characterised in that** at least one additional card is securely integrated in the regulator device (9).

13. Volumetric flow regulator (1) according to any one of the preceding claims, **characterised in that** assigned to the regulator device (9) is at least one sensor, covering a measurement range, preferably a temperature or humidity sensor, which is in contact at least with its measurement range with the gaseous medium flowing in the flow channel (2).

14. Volumetric flow regulator (1) according to any one of the preceding claims, **characterised in that** the transmitter (12) and the receiver (13) are assigned to at least one ultrasonic measuring device (11) on opposing sides of the housing (4).

15. Volumetric flow regulator (1) according to any one of the preceding claims, **characterised in that** at least one ultrasonic measuring device (11) is arranged in the housing of the regulator device (9).

16. Volumetric flow regulator (1) according to any one of the preceding claims, **characterised in that** the transmitter (12) and/or the receiver (13) of at least one ultrasonic measuring device is/are at least partially in contact with the gaseous medium flowing in the flow channel (2).

17. Volumetric flow regulator (1) according to any one of claims 1 to 15, **characterised in that** the transmitter (12) and/or the receiver (13) is/are assigned to at least one ultrasonic measuring device (11) on the outside of the housing wall (3).

18. Volumetric flow regulator (1) according to any one of the preceding claims, **characterised in that** the transmitter (12) and/or the receiver (13) is/are assigned to at least one ultrasonic measuring device (11) in a component part.

## Revendications

1. Régulateur (1) de débit volumique dévolu à une installation technique de climatisation et de ventilation, comprenant un boîtier (4) doté d'une paroi (3) et formant un canal d'écoulement (2) dédié à un agent gazeux, et un volet de régulation (7) monté à pivotement, à l'intérieur du canal d'écoulement (2), sur un arbre (6) agencé transversalement par rapport à la direction d'écoulement (5) et traversant au moins une paroi (3) du boîtier dudit canal d'écoulement (2), sachant qu'un actionneur (8) vient en prise avec la région de l'arbre (6) faisant saillie au-delà du canal d'écoulement (2), en vue de modifier la position dudit volet de régulation (7), et sachant que ledit actionneur (8) est relié à un dispositif de régulation (9), **caractérisé par le fait que** le régulateur (1) de débit volumique inclut au moins un dispositif (11) de mesure par ultrasons qui, raccordé au dispositif de régulation (9), comprend au moins un émetteur (12) et au moins un récepteur (13) ; et **par le fait que** ledit régulateur (1) de débit volumique est pourvu de deux dispositifs de réglage (17) conçus pour régler la plage admissible du débit volumique avec une valeur limite minimale et une valeur limite maximale, sachant que le dispositif de réglage (17) influence le niveau d'au moins une valeur limite et sachant que l'autre dispositif de réglage (17)
soit influence le niveau de la seconde valeur limite,
soit sert à commuter l'effet de l'un (17) des dispositifs de réglage entre les valeurs limites, le dispositif de mesure par ultrasons ne comportant pas d'éléments structurels pénétrant dans le canal d'écoulement.

2. Régulateur (1) de débit volumique selon la revendication précédente, **caractérisé par le fait que** l'un (17) des dispositifs de réglage sert à régler la valeur limite minimale de la plage admissible du débit volumique, et l'autre dispositif de réglage (17) sert à régler la valeur limite maximale du débit volumique admissible dans le canal d'écoulement (2).

3. Régulateur (1) de débit volumique selon la revendication précédente, **caractérisé par le fait que** les deux dispositifs de réglage (17) sont de réalisations identiques.

4. Régulateur (1) de débit volumique selon la revendication 1, **caractérisé par le fait que** l'un (17) des dispositifs de réglage sert à régler la valeur limite minimale et la valeur limite maximale de la plage admissible du débit volumique, et l'autre dispositif de réglage (17) sert à commuter l'effet de l'un (17) des dispositifs de réglage sur l'autre valeur limite respective de ladite plage admissible du débit volumique.

5. Régulateur (1) de débit volumique selon l'une des revendications précédentes, **caractérisé par le fait qu'**au moins un dispositif de réglage (17) est conçu en tant que codeur rotatif ou linéaire.

6. Régulateur (1) de débit volumique selon l'une des revendications précédentes, **caractérisé par le fait qu'**au moins un dispositif de réglage (17) est conçu en tant que potentiomètre.

7. Régulateur (1) de débit volumique selon la revendication 1, **caractérisé par le fait que** ledit régulateur (1) de débit volumique est muni d'au moins un affichage affecté à la visualisation d'au moins une valeur limite.

8. Régulateur (1) de débit volumique selon l'une des revendications précédentes, **caractérisé par le fait que** le dispositif de régulation (9) et l'actionneur (8) sont logés dans un boîtier commun.

9. Régulateur (1) de débit volumique selon l'une des revendications 1 à 7, **caractérisé par le fait que** le dispositif de régulation (9), au moins un dispositif (11) de mesure par ultrasons, et/ou l'actionneur (8), sont respectivement logés dans un propre boîtier.

10. Régulateur (1) de débit volumique selon l'une des revendications précédentes, **caractérisé par le fait que** le dispositif de régulation (9) est nanti d'au moins un connecteur (18), préférentiellement d'un connecteur (18) conçu en tant que zone d'enfichage dévolue à la réception d'une carte additionnelle destinée au raccordement à un système de niveau supérieur, de préférence à une gestion technique de bâtiment.

11. Régulateur (1) de débit volumique selon l'une des revendications précédentes, **caractérisé par le fait que** le dispositif de régulation (9) est nanti d'au moins un connecteur (18), préférentiellement d'un connecteur (18) conçu en tant que zone d'enfichage dévolue à la réception d'une carte additionnelle destinée au raccordement d'au moins un capteur supplémentaire.

12. Régulateur (1) de débit volumique selon l'une des revendications 10 ou 11, **caractérisé par le fait qu'**au moins une carte additionnelle est intégrée de manière fixe dans le dispositif de régulation (9).

13. Régulateur (1) de débit volumique selon l'une des revendications précédentes, **caractérisé par le fait qu'**au moins un capteur présentant une zone de mesures, de préférence un capteur de température ou d'humidité associé au dispositif de régulation (9) est en contact, au moins par sa zone de mesures, avec l'agent gazeux en circulation dans le canal d'écoulement (2).

14. Régulateur (1) de débit volumique selon l'une des revendications précédentes, **caractérisé par le fait que** l'émetteur (12) et le récepteur (13) d'au moins un dispositif (11) de mesure par ultrasons sont implantés sur des côtés opposés du boîtier (4).

15. Régulateur (1) de débit volumique selon l'une des revendications précédentes, **caractérisé par le fait qu'**au moins un dispositif (11) de mesure par ultrasons est logé dans le boîtier du dispositif de régulation (9).

16. Régulateur (1) de débit volumique selon l'une des revendications précédentes, **caractérisé par le fait que** l'émetteur (12) et/ou le récepteur (13) d'au moins un dispositif (11) de mesure par ultrasons est (sont) au moins partiellement en contact avec l'agent gazeux en circulation dans le canal d'écoulement (2).

17. Régulateur (1) de débit volumique selon l'une des revendications 1 à 15, **caractérisé par le fait que** l'émetteur (12) et/ou le récepteur (13) d'au moins un dispositif (11) de mesure par ultrasons est (sont) implanté(s) sur la face extérieure de la paroi (3) du boîtier.

18. Régulateur (1) de débit volumique selon l'une des revendications précédentes, **caractérisé par le fait que** l'émetteur (12) et le récepteur (13) d'au moins un dispositif (11) de mesure par ultrasons sont intégrés dans un élément structurel.
